# EUROPÄISCHE PATENTSCHRIFT

(11) **EP 1 271 716 B1**
(45) Veröffentlichungstag und Bekanntmachung des Hinweises auf die Patenterteilung: **24.11.2004**
(21) Anmeldenummer: 01115808.6
(22) Anmeldetag: 28.06.2001
(51) Int. Cl.: H01R 39/58

(54) **Vorrichtung zur Überwachung eines Schleifkontaktelements einer elektrischen Rotationsmaschine**
Monitoring device for a wiping contact of an electric rotary machine
Dispositif de surveillance pour un contact frottant d'une machine électrique tournante

(43) Veröffentlichungstag der Anmeldung: 02.01.2003
(73) Patentinhaber: SIEMENS AKTIENGESELLSCHAFT, 80333 München (DE)
(72) Erfinder: Klaar, Jürgen, 47506 Neukirchen-Vluyn (DE)

(56) Entgegenhaltungen:
- EP-A- 0 920 092
- DE-A- 19 619 728
- GB-A- 1 488 837
- US-A- 4 390 870
- US-A- 6 034 531

## Beschreibung

Die Erfindung betrifft eine Vorrichtung zur Überwachung eines Schleifkontaktelements einer elektrischen Rotationsmaschine, insbesondere Turbogenerator, mit einer Halterung für das Schleifkontaktelement und mit einem Sensor zur Erfassung einer Zustandsgröße des Schleifkontaktelements und einer Auswerteeinheit zur Auswertung der vom Sensor erfassten Zustandsgröße, wobei die Übertragung von Signalen zu der Auswerteeinheit drahtlos erfolgt.

Die Erfindung bezieht sich insbesondere auf eine Steckbürstenhalterung für einen Turbogenerator mit Schleifringen oder für eine Erregermaschine mit Kommutatoren. In der Steckbürstenhalterung ist als auswechselbares Schleifkontaktelement eine Kohlebürste eingesteckt.

Die elektrische Rotationsmaschine weist eine Feldwicklung auf einem Läufer auf. Ein Erregerstrom der Feldwicklung wird über Schleifringe mit Kohlebürsten zugeführt Die Höhe des Erregerstroms ist bei Generatoren, die zur Energieversorgung dienen, von der benötigten Leistung abhängig. Für eine möglichst gute Übertragung des Erregerstroms durch die Kohlebürsten ist eine bestimmte spezifische Strombelastung der Bürsten erforderlich. Die Zuführung des Stroms erfolgt über rotierende Schleifringe und feststehende Kohlebürsten, die die Schleifringe kontaktieren. Während des Kontaktes schleifen die Bürsten an den entsprechenden rotationssymmetrischen Flächen der Schleifringe. Hierdurch bedingt, unterliegen die Bürsten einem hohen Verschleiß.

Die Bürsten sind in den sogenannten Steckbürstenhalterungen angeordnet, die ihrerseits in stationären Ringen gehaltert werden. Die Steckbürstenhalterungen und die Ringe sind so ausgestaltet, dass die Steckbürstenhalterungen relativ leicht vom Halter entfernt werden können. Die in der Steckbürstenhalterung angeordnete Bürste, insbesondere Kohlebürste, muss ausgetauscht werden, wenn die Bürste ihre minimal zulässige Länge erreicht hat.

Wegen des hohen Verschleißes und da zu dem die Standzeiten der einzelnen Kohlebürsten sehr unterschiedlich sind, muss der Abrieb der Kohlebürsten im Rahmen von Wartungsarbeiten in relativ kurzen Zeitabständen überprüft werden. Derartige Wartungsarbeiten erfolgen während des Betriebs bei Betriebsspannung. Die Wartungsarbeiten sind aufgrund des Gefährdungspotenzials nur durch entsprechend geschultes Fachpersonal durchzuführen. Zudem sind sie sehr zeitaufwändig, da beispielsweise bei einem Turbosatz mit 6000 Ampere Erregerstrom etwa 120 Kohlebürsten gewartet werden müssen.

Allgemein ist das System zwischen Kohlebürsten und Schleifringen bzw. Kommutatoren - neben dem normalen Verschleiß - auch sehr störanfällig und muss daher zusätzlich überwacht werden. Störgrößen sind ein zu hoher Verschleiß, eine zu hohe Temperatur, ein sogenanntes Bürstenfeuer, damit verbunden sogenannte Brandflecken, unzulässige Schwingungen und Rattern, ein Ausbrechen der Bürsten usw. Zur Fehlersuche ist generell eine aufwendige Messinstrumentierung notwendig mit Messleitungen, die von der jeweiligen Kohlebürste zu einer entsprechenden Auswerteeinheit geführt werden. Dabei müssen oftmals zunächst Lüftungs- und Schallschutzeinrichtungen, Filter usw. demontiert werden, um die Messleitungen zu der jeweiligen zu überprüfenden Kohlebürste führen zu können. Dabei wird unter anliegenden Spannungen gearbeitet, was ein Gefährdungspotenzial darstellt.

Vorrichtungen zum Überwachen des Verschleißes der Kohlebürsten sind beispielsweise zu entnehmen aus der DE 197 58 235, der DE 196 19 728 A1 sowie der DE 196 19 733 A1. In diesen Dokumenten sind unterschiedliche Sensorsysteme zur Erfassung des Verschleißes vorgesehen

Insbesondere in der DE 196 19 733 werden optische Sensoren sowie induktive, kapazitive oder optoelektrische Weggeber vorgesehen, über die die Position und damit der Verschleiß der Kohlebürste detektiert werden soll. Weiterhin ist ein piezoelektrischer Fühler als Kraftaufnehmer zur Bestimmung der Federkraft vorgesehen, mit der die Kohlebürste gegen den Schleifring gepresst wird. Zudem ist ein fluidisches System beschrieben, bei dem ab einem gewissen Verschleiß der Kohlebürste ein Strömungsweg für Druckluft freigegeben oder verschlossen wird. Alle bekannten Systeme benötigen eine aufwändige Leitungsführung, so z.B. elektrische Leitungen von den Sensoren zu einer Auswerte- und Erfassungseinheit außerhalb der Steckbürstenhalterung oder beispielsweise aufwändige Druckluftleitungen. Bei einem Wechsel der Kohlebürsten müssen diese Leitungen zunächst gelöst und anschließend wieder verbunden werden, was insgesamt zu einem zeitaufwändigen Bürstenaustausch führt. Insbesondere bei der Verbindung der Sensoren über elektrische Leitungen zu einer Auswerteeinheit sind zusätzliche Maßnahmen zur Potenzialtrennung bzw. zur Spannungsfestigkeit erforderlich.

Eine Vorrichtung zur Überwachung eines Schleifkontaktelements gemäss Oberbegriff des Anspruchs 1 ist aus EP-A-920092 bekannt.

Der Erfindung liegt die Aufgabe zugrunde, eine Vorrichtung zur Überwachung eines Schleifkontaktelements anzugeben, die eine sichere Funktion gewährleistet und insbesondere auch servicefreundlich sowie preisgünstig ist.

Die Aufgabe wird gemäß der Erfindung gelöst durch die Merkmale des Patentanspruchs 1. Danach ist vorgesehen, dass von einem Sensor eine Zustandsgröße eines in einer Halterung gehaltenen Schleifkontaktelements, insbesondere eine Kohlebürste, erfasst und einer Auswerteeinheit zur Auswertung zugeführt wird, wobei die Übertragung von Signalen zu der Auswerteeinheit drahtlos erfolgt.

Für eine sichere und zuverlässige Erfassung des Verschleißes des Schleifkontaktelements ist der Sensor zweiteilig nach dem Geber-Nehmer-Prinzip aufgebaut, wobei der eine Teil feststehend und der andere Teil korrelierend zum Verschleiß beweglich angeordnet ist. Die beiden Teile sind dabei als Dauermagnet und als Relais, insbesondere als sogenanntes Reedrelais ausgebildet. Erreicht der Dauermagnet das Relais, wird dieses geschaltet. Das Schaltsignal wird als Messsignal an das Elektronikmodul weitergeleitet. Die Relativverschiebung zwischen Relais und Dauermagnet wird durch den zunehmenden Verschleiß des Schleifkontaktelements hervorgerufen.

Dabei sind mehrere dem Relais zugeordnete Dauermagneten an unterschiedlichen Positionen vorgesehen, was zur Ermittlung von unterschiedlichen Verschleißwerten dient, um den Grad des Verschleißes in diskreten Schritten mit verfolgen zu können.

Hierzu sind zweckdienlicherweise auch mehrere voneinander beabstandete Relais vorgesehen. Die unterschiedliche Positionierung dieser Relais dient ebenfalls zur Ermittlung von unterschiedlichen Verschleißwerten, die unabhängig voneinander erfassbar sind. Hierzu werden insbesondere die Messsignale der einzelnen Relais dem jeweiligen Relais eindeutig zugeordnet und bei der Verarbeitung zu dem an die Auswerteeinheit zu übermittelnden Signal mit einer entsprechenden Kodierung versehen, die eine Identifizierung des jeweiligen Relais erlaubt.

Durch die drahtlose Übertragung werden aufwändige Leitungsführungen zwischen der Halterung, insbesondere einer Steckbürstenhalterung, und der Auswerteeinheit vermieden. Dadurch sind im Servicefall keine zusätzlichen Maßnahmen beim Trennen und beim Wiederverbinden der Leitungen notwendig.

Durch die drahtlose Überwachung ist ferner eine kontinuierliche Überwachung auch im Hinblick auf mögliche Störungen neben dem normalen Verschleiß möglich. Eine aufwändige zusätzliche Messinstrumentierung und eine Demontage von entsprechenden Einrichtungen, um zu der Steckbürstenhalterung zu gelangen, sind nicht notwendig. Insgesamt ist dadurch eine sehr hohe Servicefreundlichkeit erreicht. Für die Überwachung ist zudem kein unmittelbares Arbeiten im Bereich von spannungsführenden Teilen notwendig. Die Überwachung erfolgt vielmehr dezentral über die Überwachungseinheit und kann gegebenenfalls auch automatisch durchgeführt werden. Selbst automatische Sicherungsmaßnahmen bei Erkennen eines unzulässigen Betriebszustands, beispielsweise eine Notabschaltung des Generators, können automatisch veranlasst werden. Da weiterhin keine speziellen Leitungen zu den Steckbürstenhalterungen geführt werden brauchen, ist dieses System in einfacher Weise bei bestehenden Steckbürsten nachrüstbar. Auch braucht der prinzipielle Aufbau der Kohlebürsten nicht verändert zu werden. Weiterhin ist die Gefahr eines Kurzschlusses aufgrund der fehlenden Messleitungen gebannt und es sind auch keine Maßnahmen zur Potenzialtrennung der einzelnen Sensoren untereinander erforderlich. Für die drahtlose Übertragung der Signale können zudem herkömmliche Systeme der Mikroelektronik verwendet werden, die sowohl einen geringen Platzbedarf als auch sehr kostengünstig sind.

Zweckdienlicherweise ist vorgesehen, dass die Übertragung der Signale über Funkwellen oder optoelektronisch erfolgt. Für die Funkwellen wird dabei insbesondere ein Frequenzbereich bei etwa 433 MHz eingestellt. Für die optoelektronische Übertragung werden insbesondere Infrarotsignale herangezogen. Diese Maßnahmen gewährleisten eine sichere und störungsfreie Übertragung der Signale.

Vorzugsweise ist weiterhin vorgesehen, dass der Sensor mit einem Elektronikmodul verbunden ist, das ein Sendemodul zur Übertragung der Signale aufweist. Im Elektronikmodul erfolgt dabei in vorteilhafter Weise die Umsetzung der vom Sensor erfassten Messsignale in die für die Übermittlung vorgesehenen Signale, die vom Signalmodul abgegeben werden. Im Elektronikmodul können weitere Funktionen integriert sein und es kann eine erste Aufbereitung der Messsignale erfolgen.

Zweckdienlicherweise ist für den Betrieb des Sensors sowie des elektronischen Moduls eine autarke Energieversorgung vorgesehen, beispielsweise durch eine Batterie, so dass insgesamt die Überwachung unabhängig von einer zentralen Energieversorgung jederzeit sicher gewährleistet ist.

In einer bevorzugten Ausgestaltung umfasst das Elektronikmodul weiterhin einen Zwischenspeicher zur Speicherung der erfassten Messsignale. Dadurch wird die Möglichkeit geschaffen, mit dem Sensor eine kontinuierliche Messung durchzuführen, die diesen Messdaten zugeordneten Signale nur zu bestimmten Zeiten oder lediglich auf Anfrage an die Auswerteeinheit zu übermitteln.

Insbesondere wird dadurch die Möglichkeit eröffnet, die Signale mehrerer Sensoren gemeinsam in der Auswerteeinheit zu erfassen, wie es in einer bevorzugten Weiterbildung vorgesehen ist. Im Fall der Zwischenspeicherung der Messsignale im Elektronikmodul erfolgt der Datenaustausch mit der Auswerteeinheit intermittierend, also abwechselnd.

Weiterhin ist dabei vorzugsweise vorgesehen, dass die an die Auswerteeinheit übermittelten Signale eine Kodierung aufweisen. Diese Kodierung ist spezifisch den einzelnen Schleifkontaktelementen bzw. den jeweils ihnen zugeordneten Sensoren oder Elektronikmodulen zugeordnet. Die Kodierung umfasst dabei beispielsweise eine Identifizierungsnummer, den Ort, an dem das Schleifkontaktelement platziert ist, sowie das Datum und die Zeit, zu der das Messsignal erfasst wurde.

Im Hinblick auf eine möglichst kompakte und integrale Bauweise ist der Sensor zusammen mit dem Schleifkontaktelement in einem Gehäuse der Halterung angeordnet. Das Gehäuse weist eine Schleifkontaktaufnahme für das Schleifkontaktelement auf, an die sich ein rohrförmiges Gehäuseteil mit innenliegendem Teleskoprohr anschließt. In das Teleskoprohr reicht ein starr mit diesem verbundenes Verschiebeelement hinein, an dem der bewegliche Teil des Sensors angeordnet ist. Das Teleskoprohr wirkt mit dem Schleifkontaktelement zusammen, so dass eine aufgrund des Verschleißes bedingte Positionsänderung zu einer Verschiebung des beweglichen Teils des Sensors führt. Der feststehende Teil des Sensors ist dagegen nach der Justierung und der Montage ortsfest im Inneren des rohrförmigen Gehäuseteils angeordnet.

Dabei ist das Verschiebeelement vorzugsweise als Rohr, insbesondere als elektrisch nicht leitendes Kunststoffrohr, ausgebildet, an dessen Innenwand der bewegliche Teil des Sensors angeordnet ist. Zusätzlich ist vorgesehen, dass in das Innere dieses Rohres eine Instrumentierungslanze mit dem feststehenden Teil geführt ist. Die Instrumentierungslanze ist dabei bevorzugt ebenfalls rohrförmig ausgebildet, wobei in ihrem Inneren Leitungen zu dem Elektronikmodul geführt sind. Mit einem derartigen Aufbau ist insgesamt eine sehr kompakte Bauweise erreicht. Zudem ist eine solche Anordnung mit relativ geringem Montageaufwand in herkömmlichen Steckbürstenhalterungen nachrüstbar. Alternativ hierzu kann die Instrumentierungslanze auch das Verschiebeelement umfassen.

Um weitere Störgrößen neben dem normalen oder auch neben dem übermäßigen Verschleiß zu erfassen, sind in bevorzugten Weiterbildungen zusätzlich oder alternativ ein Schwingungssensor, ein Temperatursensor, ein Stromsensor und/oder ein Federkraftsensor vorgesehen.

Der Schwingungssensor dient zur Erfassung von unzulässigen Schwingungen des Schleifkontaktelements. Hierzu werden insbesondere die Beschleunigungen des Schleifkontaktelements beim Betrieb ausgewertet. Die auftretenden Schwingungen wirken oftmals in mehrere Richtungen. Über den Schwingungssensor sind daher vorzugsweise unterschiedliche Schwingungsrichtungen voneinander unterscheidbar erfassbar. Aus der Schwingungsrichtung und Schwingfrequenz können Rückschlüsse auf die Art der Schwingung und auf das damit verbundene Gefährdungspotential geschlossen werden.

Bei den Schwingungen besteht das Problem, zwischen zulässigen und kritischen Schwingungen zu unterscheiden. Daher ist in einer bevorzugten Weiterbildung vorgesehen, dass die vom Schwingungssensor erfassten Messsignale speicherbar sind und dass die Auswerteeinheit zur Ausführung eines Langzeitvergleichs ausgebildet sind. Ein solcher Langzeitvergleich bietet eine sehr gute Aussagekraft im Hinblick auf die Bewertung der Schwingungen.

Der Temperatursensor dient zur Erfassung der im Bereich der Schleifkontaktelemente herrschenden Temperaturen. Somit werden unzulässig hohe Temperaturen in einfacher Weise erfasst. Der Temperatursensor bietet sich insbesondere für eine kontinuierliche Überwachung während des Betriebs an. Störungen können aufgrund einer erhöhten Temperatur somit frühzeitig erkannt und mögliche gravierende Folgeschäden durch entsprechende Gegenmaßnahmen vermieden werden. Dabei ist in einer zweckdienlichen Weiterbildung im Schleifkontaktelement eine Bohrung vorgesehen, die in Richtung zu der dem Verschleiß unterliegenden Stirnseite führt. In dieser Bohrung ist der Temperatursensor gegebenenfalls verschiebbar. Somit besteht die Möglichkeit, auch unmittelbar an der Verschleißseite des Schleifkontaktelements die Temperatur zu erfassen.

Ein wesentliches Element für einen zuverlässigen Betrieb ist der über das Schleifkontaktelement fließende Strom. Dessen Erfassung über den Stromsensor ermöglicht also frühzeitige Aussagen über Kontaktierungsfehler zwischen dem Schleifkontaktelement und dem Schleifring.

Der Federspannungssensor dient zur Erfassung einer Federspannung einer auf das Schleifkontaktelement wirkenden Feder. Mit dieser Feder wird das Schleifkontaktelement gegen den Schleifring gepresst. In Abhängigkeit der Federspannung können Rückschlüsse einerseits auf den Verschleiß und andererseits auf einen mangelhaften Anpressdruck und damit auf eine mangelhafte Kontaktierung zwischen Schleifkontaktelement und Schleifring gezogen werden.

Ausführungsbeispiele der Erfindung werden im folgenden anhand der Figuren näher erläutert. Es zeigen jeweils in schematischen Darstellungen:
- FIG 1: Eine Steckbürstenhalterung mit einer Sensoranordnung zur Erfassung des Verschleißes eines Schleifkontaktelements und mit einem zur Übertragung von Funksignalen ausgebildeten Elektronikmodul,
- FIG 2: ein grob vereinfachtes Blockschaltbild zur Illustration der Signalverarbeitung mit dem Elektronikmodul nach FIG 1,
- FIG 3: eine mit der FIG 1 vergleichbare Darstellung, wobei das Elektronikmodul zur Übertragung von Infrarotsignalen ausgebildet ist,
- FIG 4: eine vereinfachte Blockbilddarstellung zur Illustration der Signalverarbeitung mit dem Elektronikmodul nach FIG 3,
- FIG 5: eine stark vereinfachte Darstellung, aus dem das Zusammenwirken der einzelnen Teilelemente der Vorrichtung zur Überwachung hervorgeht,
- FIG 6: eine mit FIG 1 vergleichbare Darstellung, bei der anstelle der Sensoranordnung zur Verschleißerfassung ein Schwingungssensor angeordnet ist, und
- FIG 7: eine mit der FIG 1 vergleichbare Darstellung, wobei hier anstelle der Sensoranordnung zur Verschleißerfassung ein Temperatursensor vorgesehen ist.

In den Figuren sind gleichwirkende Teile mit den gleichen Bezugszeichen versehen.

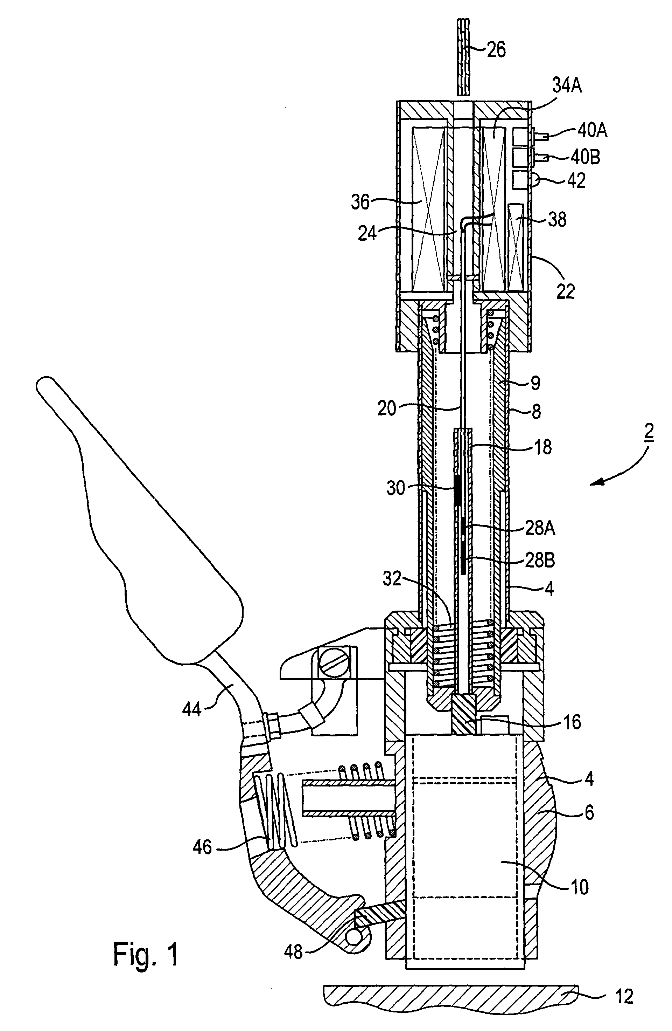

Nach FIG 1 umfasst eine Steckbürstenhalterung 2 ein Gehäuse 4, welches in einem unteren Bereich eine Schleifkontaktaufnahme 6 und an diese anschließend ein rohrförmiges Gehäuseteil 8 aufweist. Im Inneren des Gehäuseteils 8 ist ein Teleskoprohr 9 angeordnet. In der Schleifkontaktaufnahme 6 ist ein Schleifkontaktelement 10, insbesondere eine Kohlebürste, angeordnet. Das Schleifkontaktelement 10 ist beim Betrieb in Kontakt mit einem Schleifring 12.

Das Teleskoprohr 9 ist durch eine stirnseitige Begrenzung 14 der Schleifkontaktaufnahme 6 zu dieser geführt. Das Teleskoprohr 9 ist stirnendseitig verschlossen und drückt mit einem Verbindungselement 16 auf die Kopfseite des Schleifkontaktelements 10. Auf diesem Verbindungselement 16 sitzt ein Kunststoffrohr 18, das in das Innere des Teleskoprohrs 9 hineinreicht. In das Kunststoffrohr 18 reicht wiederum von oben eine Instrumentierungslanze 20 hinein. Dies ist ebenfalls rohrförmig ausgebildet und mit einem Elektronikmodul 22 verbunden. Das Elektronikmodul 22 sitzt dabei auf dem rohrförmigen Gehäuseteil 8 auf. Das Elektronikmodul 22 weist mittig eine Ausnehmung 24 auf, durch die eine Messlanze 26 hindurch und in das Teleskoprohr 9 bis zu dem Verbindungselement 16 eingeführt werden kann.

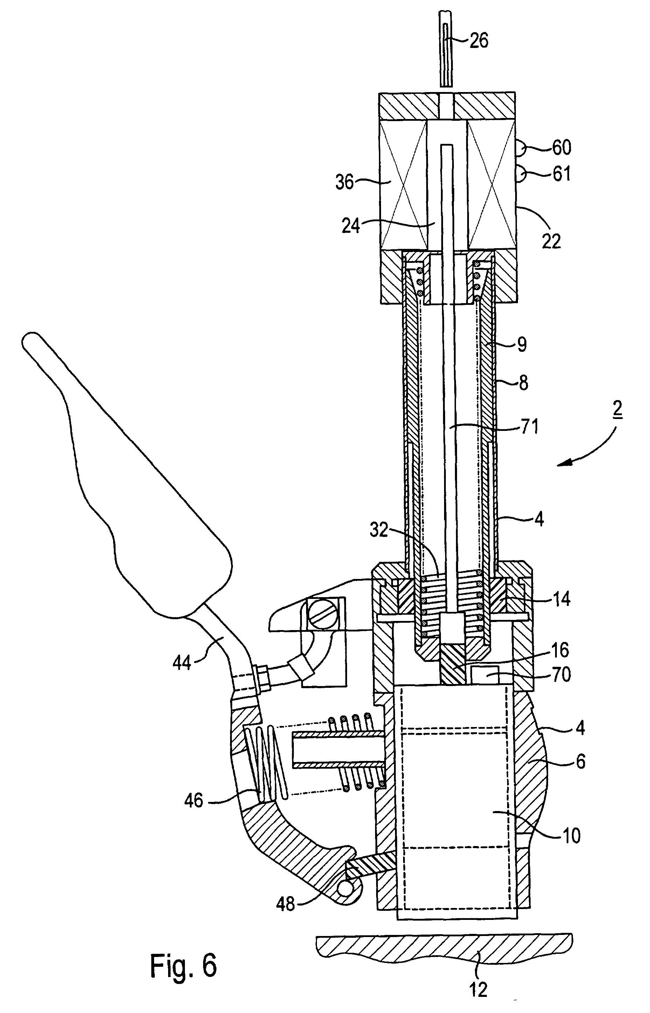

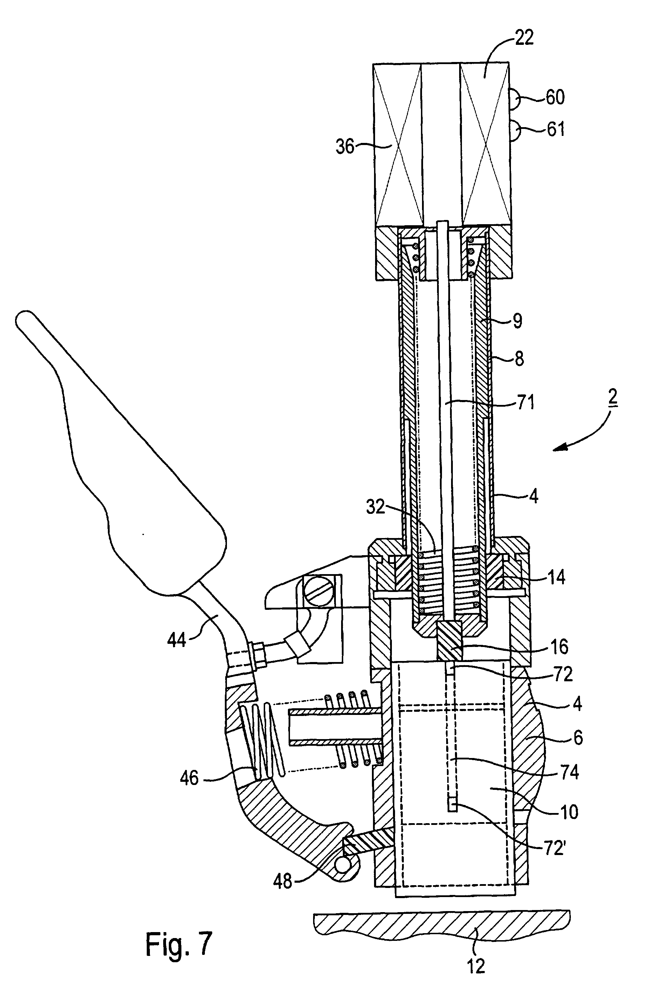

Die Messlanze 26 ist dabei vorzugsweise als Messrohr ausgebildet, welches endseitig beispielsweise nach Art einer Gabel mit Schlitzen versehen ist. Die Messlanze 26 ermöglicht beispielsweise ein manuelles Messen des Verschleißes des Schleifkontaktelements 10. Sie ist, insbesondere bei Verzicht auf eine automatische Messung des Verschleißes zweckmäßig, wie es beispielsweise gemäß den Ausführungsbeispielen zu den FIG 6 und 7 vorgesehen ist.

An der Instrumentierungslanze 20 sind endseitig voneinander beabstandet zwei Relais 28 A,B befestigt, die insbesondere als Reedrelais ausgebildet sind. An der Innenwandung des Kunststoffrohrs 18 ist ein Dauermagnet 30 angeordnet. Von den beiden Relais 28 A,B wird jeweils eine elektrische Leitung in Inneren der Instrumentierungslanze 20 zum Elektronikmodul 22 geführt. Die Relais 28 sind ortsfest gehalten. Hierzu ist die Instrumentierungslanze 20 starr mit dem Elektronikmodul 22 befestigt. Demgegenüber ist der Dauermagnet 30 beweglich angeordnet, da bei einem Verschleiß des Schleifkontaktelements 10 dieses aufgrund einer im Inneren des Teleskoprohrs angeordneten Druckfeder 32 in Richtung zum Schleifring 12 nachgeführt wird. Dabei verschiebt sich zwangsläufig auch das mit dem Schleifkontaktelement 10 über das Verbindungselement 16 verbundene Kunststoffrohr 18, so dass der Dauermagnet 30 sich in Richtung auf den Schleifring 12 zubewegt.

Sobald der Dauermagnet 30 das erste Relais 28A erreicht, schaltet dieses, gibt also einen Spannungsimpuls an das Elektronikmodul 22 ab. Dort wird dieses Messsignal in einem Signalmodul 34A zu einem Funksignal aufbereitet, welches drahtlos abgeben wird. Neben dem Signalmodul 34A umfasst das Elektronikmodul 22 eine austauschbare Batterie 36, die für eine autarke Energieversorgung des Elektronikmoduls 22 sorgt. Weiterhin ist im Elektronikmodul 22 ein Spannungsgrenzwertgeber 38, zwei Taster 40A,B sowie eine Kontrolllampe 42 vorgesehen, die aufleuchtet, wenn die minimal zulässige Länge des Schleifkontaktelements 10 erreicht ist. Die Taster 40A,B dienen unter anderem zur Funktionskontrolle der Relais. Das Sendemodul 34A gibt Funksignale beispielsweise im Frequenzbereich um 433 MHz ab.

Die Steckbürstenhalterung 2 umfasst weiterhin einen an der Schleifkontaktaufnahme 6 schwenkbeweglich befestigten Griffhebel 44. Zwischen dem Griffhebel 44 und der Schleifkontaktaufnahme 6 ist eine Feder 46 angeordnet, die den Griffhebel 44 von der Schwenkkontaktaufnahme 6 wegdrückt. Der Griffhebel 44 greift an seinem unteren Ende an einen Klemmkörper 48 an. Der Griffhebel 44 mit dem Klemmkörper 48 dienen zur Sicherung des Schleifkontaktelements 10 in der Schleifkontaktaufnahme 6 und ermöglichen den Austausch des Schleifkontaktelements 10.

Beim Betrieb der elektrischen Maschine, insbesondere des Generators, gleitet der rotierende Schleifring 12 an dem Schleifkontaktelement 10 entlang. Dadurch wird dieses zunehmend verschlissen und er wird über die Druckfeder 32 nachgeführt. Mit zunehmenden Verschleiß nähert sich der Dauermagnet 30 daher zunächst dem ersten Relais 28A. Sobald er dieses erreicht, schaltet das Relais 28A und es wird ein entsprechendes Funksignal erzeugt. Die Erzeugung dieses ersten Funksignals korreliert dabei mit einem ersten Verschleißgrenzwert. Dieser gibt beispielsweise an, dass nur noch eine vorbestimmte Betriebsdauer des Schleifkontaktelements 10 möglich ist. Wird dieses weiter verschlissen, so erreicht der Dauermagnet 30 auch das zweite Relais 28B und dieses schaltet, so dass ein zweites Funksignal abgegeben wird. Dieses zweite Funksignal ist ein Indiz dafür, dass ein weiterer Verschleißgrenzwert erreicht ist, der nunmehr beispielsweise die absolute Verschleißgrenze angibt und einen Austausch des Schleifkontaktelements 10 zwingend erforderlich macht.

Den einzelnen Relais 28A,B sind jeweils kodierte Funksignale zugeordnet, wobei die Kodierung im Elektronikmodul 22 erfolgt, so dass die beiden den Relais 28A,B zugeordneten Funksignale unterscheidbar sind. Alternativ zu der Ausgestaltung mit den beiden Relais 28A,B besteht auch die Möglichkeit, mehrere Dauermagnete 30 an der Innenwandung des Kunststoffrohrs 18 vorzusehen. Durch Verfolgung der von dem Relais 28 verursachten Signale lässt sich der Verschleiß kontinuierlich überwachen.

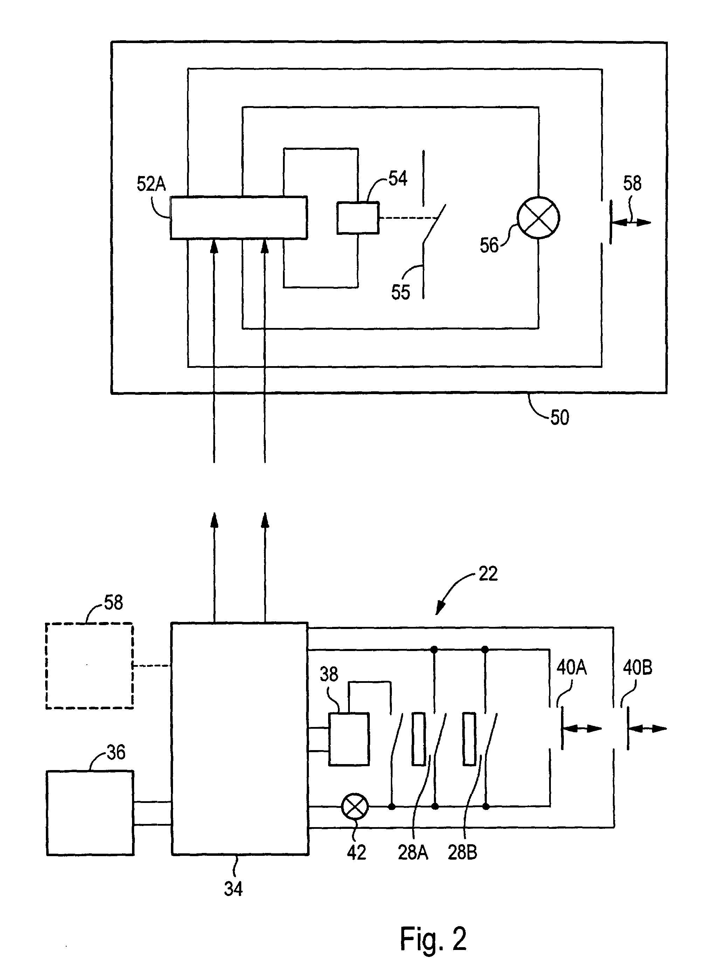

Aus FIG 2 ist anhand des dargestellten Blockschaltbilds die Übertragung der Funksignale vom Elektronikmodul 22 an eine Auswerteeinheit 50 zu entnehmen. Die Auswerteeinheit 50 ist zugleich als Empfangsstation für die ankommenden Funksignale ausgebildet und weist ein Empfangsmodul 52A auf, welches die Funksignale detektiert. Vom Empfangsmodul 52A wird ein Schalter 54 angesteuert, der einen potenzialfreien Leitungskontakt 55 beispielsweise zu einer Warte zur Signalweiterleitung schließt. Weiterhin wird zugleich eine Anzeigelampe 56 aktiviert und es ist ein Ein-/Austaster zum Quittieren vorgesehen. Aus der Blockbilddarstellung des Elektronikmoduls 22 sind die einzelnen zu FIG 1 bereits beschriebenen Elemente zu entnehmen, nämlich die Batterie 36, das Signalmodul 34, der Spannungsgrenzwertgeber 38 und die beiden Taster 40A,B. In diesem Blockbildschaltbild sind der Funktion des Elektronikmoduls 22 die beiden Relais 28A,B zugeordnet. Der eine Taster 40A ist als Prüftaster ausgebildet, über den die Funktionsfähigkeit überprüfbar ist. Der zweite Taster 40B dient zur Signalcodierung. Dabei wird über den zweiten Taster 40B bei der Erstinstallation das Signalmodul 34 entsprechend programmiert, so dass codierte Funksignale an die Auswerteeinheit 50 übermittelt werden.

Zusätzlich kann im Elektronikmodul 22 ein Zwischenspeicher 58 vorgesehen sein (gestrichelt dargestellt). In dem Zwischenspeicher 58 werden vorzugsweise die bereits aufgearbeiteten Signale zwischengespeichert und entweder in regelmäßigen periodischen Zeitabständen an die Auswerteeinheit 50 oder erst bei einer Abfrage durch die Auswerteeinheit 50 an diese übermittelt. In FIG 2 ist der Datenaustausch lediglich vom Signalmodul 34A zum Empfangsmodul 52A dargestellt. Die beiden Module 34A,52A sind vorzugsweise jedoch sowohl als Sende- als auch Empfangsmodul ausgebildet, so dass sie miteinander kommunizieren und Daten austauschen können.

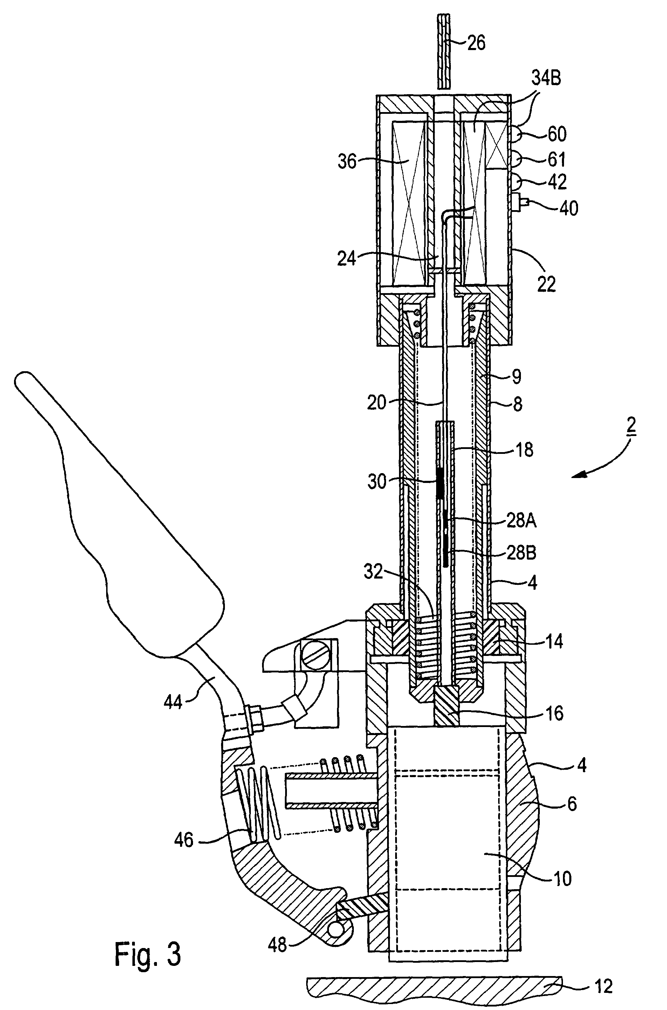

Die Steckbürstenhalterung 2 gemäß FIG 3 ist im Wesentlichen identisch zu der gemäß FIG 1 aufgebaut, mit der Maßgabe, dass nunmehr ein Signalmodul 34B für die Abgabe von Infrarotsignalen vorgesehen ist. Auch dieses Sendemodul 34B ist wie das Sendemodul 34A vorzugsweise programmier- und kodierbar. Für die Abgabe der Infrarotsignale weist das Sendemodul 34B eine Infrarotlampe 60 auf. Zum Empfang von Signalen ist ein Infrarotdetektor 61 vorgesehen.

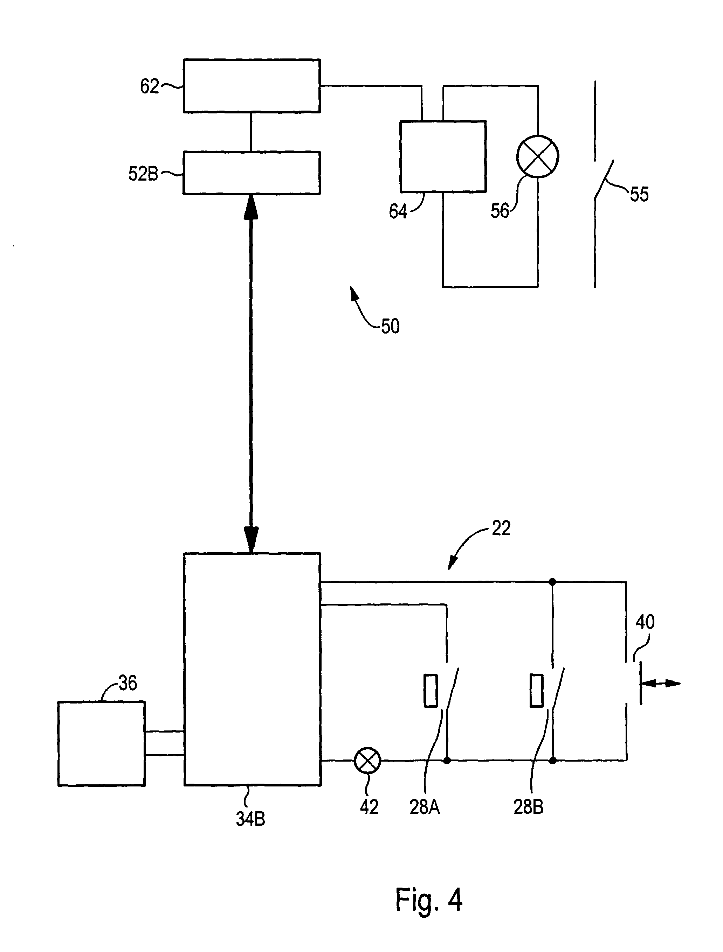

Das zu dem Ausführungsbeispiel gemäß FIG 3 korrelierende Blockschaltbild ist in FIG 4 dargestellt. Auch hier sind dem Elektronikmodul 22 wiederum als funktionelle Bestandteile die beiden Relais 28A,B zugeordnet. Die Auswerteeinheit 50 umfasst ein Empfangsmodul 52B, das nunmehr für den Empfang und die Abgabe von Infrarotsignalen ausgebildet ist. Durch den Doppelpfeil zwischen Sendemodul 34B und Empfangsmodul 52B ist angedeutet, dass beide Module 34B, 52B sowohl zum Senden als auch Empfangen von Infrarotsignalen ausgebildet sind. Das Empfangsmodul 52B ist über eine Infrarotschnittstelle mit einem Computer 62 verbunden, der die weitere Auswertung veranlasst und insbesondere ein Schaltgerät 64 ansteuert, so dass bei einem entsprechenden Signal die Anzeigelampe 56 aktiviert wird und den potenzialfreien Leitungskontakt 55 zur Warte schließt.

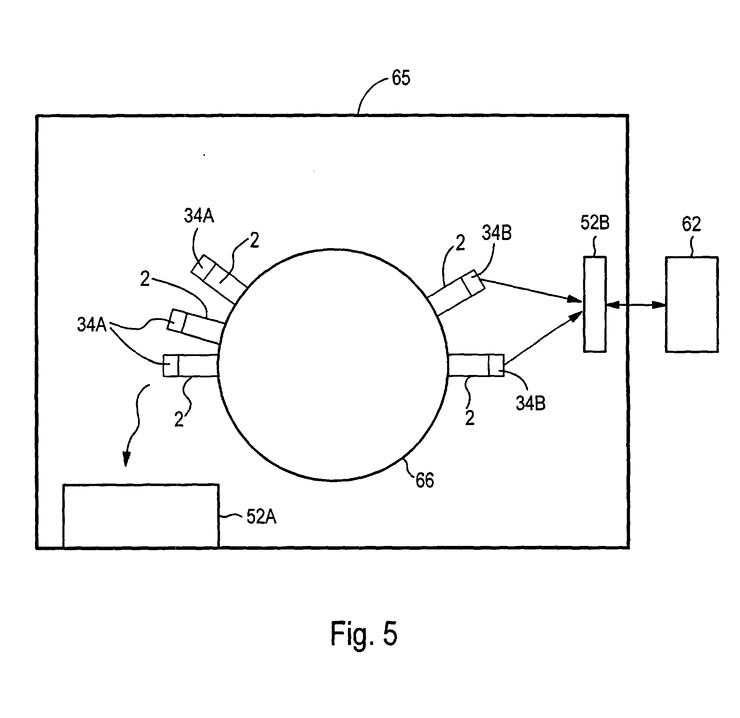

Aus FIG 5 ist das prinzipielle Zusammenwirken der einzelnen für die Überwachung der Schleifkontaktelemente 10 vorgesehenen Elemente zu entnehmen. Danach ist in einer sogenannten Lufzführungshaube 65 ein Steckbürstenhalterträger 66 angeordnet, der an seinem Umfang mehrere Steckbürstenhalterungen 2 aufweist. Die Steckbürstenhalterungen 2 weisen jeweils ein Signalmodul 34A,B auf, über das codierte und schleifkontaktelementspezifische Signale abgegeben werden. Dabei sind die drei auf der linken Bildhälfte dargestellten Signalmodule 34A zur Abgabe von Funksignalen ausgebildet, die von einem entsprechenden Empfangsmodul 52A für die Funksignale empfangen werden. Demgegenüber sind die beiden Signalmodule 34B auf der rechten Bildhälfte zur Abgabe von Infrarotsignalen ausgebildet, die von dem zugeordneten Empfangsmodul 52B empfangen werden. Letzteres steht über eine Infrarotverbindung in Kontakt mit dem Computer 62.

Wie bereits erwähnt sind die Empfangsmodule 52A,B der Auswerteeinheiten 50 auch als Sendeeinheiten ausgebildet, so dass eine Datenübertragung zu den Elektronikmodulen erfolgen kann. Über diesen Weg besteht die Möglichkeit, die entsprechenden Elektronikmodule 22 zu codieren und einzustellen.

Bei der Steckbürstenhalterung 2 nach FIG 6 ist auf die Messanordnung zur automatischen Verschleißbestimmung verzichtet. Die Verschleißbestimmung erfolgt hier über die Messlanze 26 manuell. Gemäß diesem Ausführungsbeispiel ist ein Schwingungssensor 68 vorgesehen, der unmittelbar im Anschluss an das Verbindungselement 16 angeordnet ist. Schwingungsbewegungen des Schleifkontaktelements 10 werden daher unmittelbar von dem Schwingungssensor erfasst. Dieser ist dabei insbesondere als ein analoger oder digitaler Beschleunigungsaufnehmer ausgebildet. Er ist dabei als mehrdimensional messender Sensor ausgestaltet, um Schwingungen unterschiedlicher Schwingungsrichtungen zu detektieren und unterscheiden zu können. An den Schwingungssensor 68 schließt sich ein Leitungsrohr 71 an, in dem die Messleitungen zum Elektronikmodul 71 22 geführt werden. Die Signalübertragung erfolgt hier über Infrarotsignale. Die vom Schwingungssensor 68 gemessenen Beschleunigungen werden zur Ermittlung von Schwingungsfrequenzen, Amplituden und Phasen anschließend in der Auswerteeinheit 50, die den Computer 62 umfassen kann, analysiert. Im Computer 62 erfolgt insbesondere auch ein Langzeitvergleich der erfassten Schwingungsdaten. Aus der Analyse kann eine Diagnose über Störungen, die beispielsweise durch Wellenschwingungen in Folge von Unrundheit der Schleifringe infolge von Brandflecken auf den Schleifringen oder aufgrund von Schwingungen der Schleifkontaktelemente 10 verursacht werden, erstellt werden. Sobald ein vorbestimmter Beschleunigungswert überschritten wird, erfolgt eine entsprechende Grenzwertmeldung. Zur Erfassung der Schwingungen des Schleifkontaktelements 10, die sich durch ein Rattern deutlich machen können, wird der Schwingungssensor 68 vorzugsweise unmittelbar auf die Kopfseite des Schleifkontaktelements 10 aufgesetzt, wie dies durch den zweiten Schwingungssensor 70 angedeutet ist. Die beiden Schwingungssensoren 68, 70 können auch gleichzeitig eingesetzt werden.

Gemäß FIG 7 ist ein Temperatursensor 72 vorgesehen, der ebenfalls im Bereich der Kopfseite des Schleifkontaktelements 10 angeordnet ist. In das Schleifkontaktelement 10 reicht eine Bohrung 74 hinein, und der Temperatursensor 72 ist in eine untere Position führbar, wie dies durch den Temperatursensor 72' in der unteren Position dargestellt ist. Der Temperatursensor 72 kann also in die Nähe der Verschleißfläche des Schleifkontaktelements 10 geführt werden, um dort die Temperatur zu erfassen. Bei einer überhöhten Temperatur wird ein entsprechendes Signal abgegeben.

Anstelle des Temperatursensors oder auch des Schwingungssensors kann weiterhin ein Stromsensor vorgesehen sein, der den über das Schleifkontaktelement 10 fließenden Strom misst. Weiterhin kann ein Federkraftsensor vorgesehen sein, der die Federkraft der im Teleskoprohr 9 angeordneten Druckfeder 32 erfasst, um hieraus Rückschlüsse auf den Verschleiß des Schleifkontaktelements 10 ziehen zu können. Die zu den einzelnen Ausführungsbeispielen beschriebenen Sensoren können auch miteinander kombiniert werden.

## Patentansprüche

1. Vorrichtung zur Überwachung eines Schleifkontaktelements (10) einer elektrische Rotationsmaschine, insbesondere Turbogenerator,
mit einer Halterung (2) für das Schleifkontaktelement (10) und mit einem Sensor (28,30,68,70,72) zur Erfassung einer Zustandsgröße des Schleifkontaktelements (10) und einer Auswerteeinheit (50) zur Auswertung der vom Sensor (28, 30, 68, 70, 72) erfassten Zustandsgröße wobei die Übertragung von Signalen zu der Auswerteeinheit (50) drahtlos erfolgt
**dadurch gekennzeichnet, dass**
der Sensor (28, 30) zur Erfassung des Verschleißes des Schleifkontaktelements (10) zweiteilig aufgebaut ist,
wobei der eine Teil (28) feststehend und der andere Teil (30) korrelierend zum Verschleiß beweglich angeordnet ist,
wobei der eine Teil als Dauermagnet (30) und der andere Teil als Relais (28) ausgebildet ist,
wobei mehrere dem Relais (28) zugeordnete Dauermagnete (30) an unterschiedlichen Positionen zur Ermittlung von unterschiedlichen Verschleißwerten vorgesehen sind, wobei mehrere voneinander beabstandete Relais (28)zur Ermittlung von unterschiedlichen Verschleißwerten vorgesehen sind.

2. Vorrichtung nach Anspruch 1,
**dadurch gekennzeichnet, dass**
die Übertragung der Signale über Funkwellen oder optoelektronisch (IR) erfolgt.

3. Vorrichtung nach Anspruch 1 oder 2,
**dadurch gekennzeichnet, dass**
der Sensor (28,30,68,70,72) mit einem Elektronikmodul (22) verbunden ist, das ein Sendemodul (34) zur Übertragung der Signale aufweist.

4. Vorrichtung nach Anspruch 3,
**dadurch gekennzeichnet, dass**
für den Betrieb des Sensors (28,30,68,70,72) und des Elektronikmoduls (22) eine autarke Energieversorgung (36) vorgesehen ist.

5. Vorrichtung nach Anspruch 3 oder 4,
**dadurch gekennzeichnet, dass**
das Elektronikmodul (22) einen Zwischenspeicher (58) umfasst.

6. Vorrichtung nach einem der vorhergehenden Ansprüche,
**dadurch gekennzeichnet, dass**
mehrere Schleifkontaktelemente (10) vorgesehen sind, denen jeweils ein Sensor (28,30,68,70,72) zugeordnet ist, und dass die Signale mehrerer Sensoren (28,30,68,70,72) gemeinsam von der Auswerteeinheit (50) erfasst werden.

7. Vorrichtung nach einem der vorhergehenden Ansprüche,
**dadurch gekennzeichnet, dass**
die an die Auswerteeinheit (50) übermittelten Signale eine Kodierung aufweisen.

8. Vorrichtung nach einem der vorhergehenden Ansprüche,
**dadurch gekennzeichnet, dass**
das Schleifkontaktelement (10) in einer Schleifkontaktaufnahme (6) eines Gehäuses (4) der Halterung (2) angeordnet ist, welches ein sich an die Schleifkontaktaufnahme (6) anschließendes rohrförmiges Gehäuseteil (8) mit einem innenliegenden Teleskoprohr (9) aufweist, das mit dem Schleifkontaktelement (10) zusammenwirkt und mit dem ein Verschiebeelement (18) starr verbunden ist, das in das Teleskoprohr (9) hineinreicht und an dem der bewegliche Teil (30) des Sensors (28,30) angeordnet ist, wobei der feststehende Teil (30) des Sensors (28,30) ortsfest im Inneren des Gehäuseteils (8) angeordnet ist.

9. Vorrichtung nach Anspruch 8,
**dadurch gekennzeichnet, dass**
das Verschiebeelement als Rohr (18) ausgebildet ist, an dessen Innenwand der bewegliche Teil (30) fest angeordnet ist, und dass in das Innere des Rohres (18) eine Instrumentierungslanze mit dem feststehenden Teil (28) geführt ist.

10. Vorrichtung nach Anspruch 9,
**dadurch gekennzeichnet, dass**
durch die Instrumentierungslanze (20) Leitungen zu dem Elektronikmodul (22) geführt sind.

11. Vorrichtung nach einem der vorhergehenden Ansprüche,
**dadurch gekennzeichnet, dass**
zur Erfassung von unzulässigen Schwingungen ein Schwingungssensor (68,70) vorgesehen ist.

12. Vorrichtung nach Anspruch 11,
**dadurch gekennzeichnet, dass**
über den Schwingungssensor (68,70) unterschiedliche Schwingungsrichtungen voneinander unterscheidbar erfassbar sind.

13. Vorrichtung nach Anspruch 11 oder 12,
**dadurch gekennzeichnet, dass**
die vom Schwingungssensor (68,70) erfassten Messsignale speicherbar sind, und dass die Auswerteeinheit (50) zur Ausführung eines Langzeitvergleichs ausgebildet ist.

14. Vorrichtung nach einem der vorhergehenden Ansprüche,
**dadurch gekennzeichnet, dass**
ein Temperatursensor (72) zur Erfassung der im Bereich des Schleifkontaktelements (10) herrschenden Temperatur vorgesehen ist.

15. Vorrichtung nach Anspruch 14,
**dadurch gekennzeichnet, dass**
im Schleifkontaktelement (10) eine Bohrung (74) vorgesehen ist, in der der Temperatursensor (72) verschiebbar ist.

16. Vorrichtung nach einem der vorhergehenden Ansprüche,
**dadurch gekennzeichnet, dass**
ein Stromsensor zur Erfassung des über das Schleifkontaktelement (10) fließenden Stroms und/oder ein Federkraftsensor zur Erfassung einer Federkraft einer auf das Schleifkontaktelement (10) wirkenden Feder (32) vorgesehen ist.

## Claims

1. Apparatus for monitoring a sliding contact element (10) in an electrical rotating machine, in particular a turbogenerator, having a holder (2) for the sliding contact element (10) and having a sensor (28, 30, 68, 70, 72) for detection of a state variable of the sliding contact element (10), and having an evaluation unit (50) for evaluation of the state variable which is detected by the sensor (28, 30, 68, 70, 72), with signals being transmitted to the evaluation unit (50) without using wires, **characterized in that** the sensor (28, 30) is constructed in two parts for detection of the wear of the sliding contact element (10), with one part (28) being arranged such that it is stationary, and the other part (30) being arranged such that it moves in a manner correlated to the wear, with one part being in the form of a permanent magnet (30), and the other part being in the form of a relay (28), with a number of permanent magnets (30), associated with the relay (28), being provided at different positions for determination of different wear values, with a number of relays (28), which are at a distance from one another, being provided for determination of different wear values.

2. Apparatus according to Claim 1, **characterized in that** the signals are transmitted via radio waves or optoelectronically (IR).

3. Apparatus according to Claim 1 or 2, **characterized in that** the sensor (28, 30, 68, 70, 72) is connected to an electronics module (22), which has a transmission module (34) for transmission of the signals.

4. Apparatus according to Claim 3, **characterized in that** an autonomous power supply (36) is provided for operation of the sensor (28, 30, 68, 70, 72) and of the electronics module (22).

5. Apparatus according to Claim 3 or 4, **characterized in that** the electronics module (22) has a buffer store (58).

6. Apparatus according to one of the preceding claims, **characterized in that** a number of sliding contact elements (10) are provided, each of which has an associated sensor (28, 30, 68, 70, 72), and **in that** the signals from a number of sensors (28, 30, 68, 70, 72) are detected jointly by the evaluation unit (50).

7. Apparatus according to one of the preceding claims, **characterized in that** the signals which are transmitted to the evaluation unit (50) have a coding.

8. Apparatus according to one of the preceding claims, **characterized in that** the sliding contact element (10) is arranged in a sliding contact receptacle (6) in a housing (4) of the holder (2) and has a tubular housing part (8) (which is adjacent to the sliding contact receptacle (6)) with an internal telescopic tube (9) which interacts with the sliding contact element (10) and to which a moving element (18) is rigidly connected, which extends into the telescopic tube (9) and on which the moving part (30) of the sensor (28, 30) is arranged, with the stationary part (30) of the sensor (28, 30) being arranged in a fixed position in the interior of the housing part (8).

9. Apparatus according to Claim 8, **characterized in that** the moving element is in the form of a tube (18) on whose inner wall the moving part (30) is arranged in a fixed manner, and **in that** an instrumentation lance is guided with the stationary part (28) into the interior of the tube (18).

10. Apparatus according to Claim 9, **characterized in that** lines are routed through the instrumentation lance (20) to the electronics module (22).

11. Apparatus according to one of the preceding claims, **characterized in that** an oscillation sensor (68, 70) is provided for detection of unacceptable oscillations.

12. Apparatus according to Claim 11, **characterized in that** different oscillation directions can be detected, such that they can be distinguished from one another, via the oscillation sensor (68, 70).

13. Apparatus according to Claim 11 or 12, **characterized in that** the measurement signals which are detected by the oscillation sensor (68, 70) can be stored, and **in that** the evaluation unit (50) is designed to carry out a long-term comparison.

14. Apparatus according to one of the preceding claims, **characterized in that** a temperature sensor (72) is provided for detection of the temperature in the region of the sliding contact element (10).

15. Apparatus according to Claim 14, **characterized in that** a hole (74), in which the temperature sensor (72) can be moved, is provided in the sliding contact element (10).

16. Apparatus according to one of the preceding claims, **characterized in that** a current sensor is provided for detection of the current flowing via the sliding contact element (10), and/or a spring force sensor is provided for detection of a spring force produced by a spring (32) acting on the sliding contact element (10).

## Revendications

1. Dispositif de surveillance d'un élément (10) de contact frottant d'une machine électrique tournante, notamment d'une turbogénératrice,
comportant un support (2) pour l'élément (10) de contact frottant et comportant un capteur (28, 30, 68, 70, 72) pour détecter une variante d'état de l'élément (10) de contact frottant et une unité (50) d'évaluation pour évaluer la variable d'état détectée par le capteur (28, 30, 68, 70, 72), la transmission de signaux à l'unité (50) d'évaluation s'effectuant sans fil,
**caractérisé en ce que** le capteur (28, 30), destiné à détecter l'usure de l'élément (10) de contact frottant, est construit en deux parties,
l'une (28) des parties étant disposée à poste fixe et l'autre partie (30) à déplacement d'une manière corrélée à l'usure,
l'une des parties étant réalisée sous forme d'aimant (30) permanent et l'autre partie sous forme de relais (28),
plusieurs aimants (30) permanents associés au relais (28) étant prévus en différentes positions afin de déterminer des valeurs d'usure différentes, plusieurs relais (28) mutuellement distants étant prévus afin de déterminer des valeurs d'usure différentes.

2. Dispositif suivant la revendication 1, **caractérisé en ce que** la transmission des signaux s'effectue par ondes radio ou par voie optoélectronique (infrarouge).

3. Dispositif suivant la revendication 1 ou 2, **caractérisé en ce que** le capteur (28, 30, 68, 70, 72) est relié à un module (22) électronique qui comporte un module (34) émetteur pour la transmission des signaux.

4. Dispositif suivant la revendication 3, **caractérisé en ce qu'**une alimentation (36) autonome en énergie est prévue pour le fonctionnement du capteur (28, 30, 68, 70, 72) et du module (22) électronique.

5. Dispositif suivant la revendication 3 ou 4, **caractérisé en ce que** le module (22) électronique comprend une mémoire (58) tampon.

6. Dispositif suivant l'une des revendications précédentes, **caractérisé en ce qu'**il est prévu plusieurs éléments (10) de contact frottant à chacun desquels est associé un capteur (28, 30, 68, 70, 72), et **en ce que** les signaux de plusieurs capteurs (28, 30, 68, 70, 72) sont conjointement détectés par l'unité (50) d'évaluation.

7. Dispositif suivant l'une des revendications précédentes, **caractérisé en ce que** les signaux transmis à l'unité (50) d'évaluation comportent un codage.

8. Dispositif suivant l'une des revendications précédentes, **caractérisé en ce que** l'élément (10) de contact frottant est disposé dans un logement (6) de contact frottant d'un boîtier (4) du support (2), boîtier qui comporte une partie (8) de boîtier tubulaire, se raccordant au logement (6) de contact frottant et dotée d'un tube (9) télescopique intérieur, qui coopère avec l'élément (10) de contact frottant et auquel est rigidement relié un élément (18) coulissant, qui s'étend à l'intérieur du tube (9) télescopique et sur lequel est disposée la partie (30) mobile du capteur (28, 30), la partie (28) fixe du capteur (28, 30) étant disposée à poste fixe à l'intérieur de la partie (8) de boîtier.

9. Dispositif suivant la revendication 8, **caractérisé en ce que** l'élément coulissant est réalisé sous forme de tube (18) sur la paroi intérieure duquel est disposée fixement la partie (30) mobile, et **en ce qu'**une lance d'instrumentation munie de la partie (28) fixe est dirigée à l'intérieur du tube (18).

10. Dispositif suivant la revendication 9, **caractérisé en ce que** des lignes menant au module (22) électronique passent dans la lance (20) d'instrumentation.

11. Dispositif suivant l'une des revendications précédentes, **caractérisé en ce qu'**il est prévu un capteur (68, 70) d'oscillations pour détecter des oscillations inacceptables.

12. Dispositif suivant la revendication 11, **caractérisé en ce que** le capteur (68, 70) d'oscillations permet de détecter différentes directions d'oscillation en les différenciant les unes des autres.

13. Dispositif suivant la revendication 11 ou 12, **caractérisé en ce que** les signaux de mesure détectés par le capteur (68, 70) d'oscillations sont mémorisables, et **en ce que** l'unité (50) d'évaluation est conçue pour effectuer une comparaison à long terme.

14. Dispositif suivant l'une des revendications précédentes, **caractérisé en ce qu'**il est prévu un capteur (72) de température pour détecter la température régnant dans la région de l'élément (10) de contact frottant.

15. Dispositif suivant la revendication 14, **caractérisé en ce qu'**il est prévu dans l'élément (10) de contact frottant un perçage (74) dans lequel le capteur (72) de température peut coulisser.

16. Dispositif suivant l'une des revendications précédentes, **caractérisé en ce qu'**il est prévu un capteur de courant pour détecter le courant électrique circulant par l'élément (10) de contact frottant, et/ou un capteur de force de ressort pour détecter une force de ressort d'un ressort (32) agissant sur l'élément (10) de contact frottant.
